(19) **Europäisches Patentamt**

**European Patent Office**

**Office européen des brevets**

(11) **EP 1 008 554 B1**

(12) **FASCICULE DE BREVET EUROPEEN**

(45) Date de publication et mention
de la délivrance du brevet:
**18.06.2003 Bulletin 2003/25**

(51) Int Cl.7: **C01D 3/22**

(21) Numéro de dépôt: **99204152.5**

(22) Date de dépôt: **03.12.1999**

(54) **Pastille cylindrique de sel aggloméré**

Cylindrische Salzpastille

Cylindrical pastille of agglomerated salt

(84) Etats contractants désignés:
**AT BE CH CY DE DK ES FI FR GB GR IE IT LI LU
MC NL PT SE**

(30) Priorité: **07.12.1998 FR 9815507**

(43) Date de publication de la demande:
**14.06.2000 Bulletin 2000/24**

(73) Titulaire: **SOLVAY (Société Anonyme)
1050 Bruxelles (BE)**

(72) Inventeurs:
• **Franc, Maxime
54210 Saint-Nicolas-de-Port (FR)**
• **Dupont, Gérard
54110 Dombasle (FR)**
• **Bogart, Christian
54110 Rosières-aux-Salines (FR)**

(74) Mandataire: **Jacques, Philippe et al
Solvay S.A.
Département Propriété Industrielle
310, rue de Ransbeek
1120 Bruxelles (BE)**

(56) Documents cités:
**BE-A- 772 265     FR-A- 2 564 007
GB-A- 2 188 915**

**Description**

La présente invention se rapporte à des pastilles de sel, spécialement destinées à la régénération de matières échangeuses de cations.

On sait que la régénération des résines échangeuses de cations utilisées dans les adoucisseurs d'eau industriels ou ménagers, s'effectue généralement au moyen d'une saumure saturée de chlorure de sodium. En ce qui concerne les adoucisseurs automatiques, la production de saumure saturée se fait dans un appareillage auxiliaire qui comporte un bac à régénérant contenant du chlorure de sodium solide et un servo-mécanisme assurant, en fonction des besoins de l'adoucisseur, la mise en contact de ce chlorure de sodium avec un volume convenable d'eau puis le passage de la saumure ainsi formée sur les résines échangeuses d'ions.

Le bon fonctionnement de l'adoucisseur ne peut être garanti que si, notamment, la régénération des résines est correctement assurée.

Le choix du régénérant utilisé à cet effet revêt une grande importance. Il doit en particulier :

- ne pas se prendre en masse; le cas échéant, il formerait, dans le bac à régénérant, une masse compacte soutenue par une voûte de cristaux de chlorure de sodium soudés les uns aux autres, et la surface de contact du chlorure de sodium solide avec l'eau de dissolution envoyée dans le bac serait insuffisante;
- être exempt de particules solides et d'impuretés telles que des composés du calcium, du magnésium ou du fer qui, entraînés par le courant de saumure, gênent le bon fonctionnement des adoucisseurs et enrobent ou encrassent les résines échangeuses d'ions dont la capacité d'échange diminue ainsi progressivement;
- ne pas émettre, par délitage, des particules fines de chlorure de sodium qui, au sein d'une saumure saturée, ne peuvent se dissoudre et se comportent alors comme des impuretés solides;
- présenter une granulométrie régulière et aussi serrée que possible, de façon que le volume de saumure en contact avec le régénérant soit d'une part suffisant pour la régénération, et d'autre part, constant dans le temps quel que soit l'état d'avancement de la dissolution du chlorure de sodium.

Pour résoudre ces difficultés, on a suggéré des régénérants constitués de pastilles cylindriques de sel aggloméré, dont les faces terminales sont planes ou bombées (brevet belge 772 265 - SOLVAY & CIE). Ces pastilles de sel connues présentent généralement une bonne résistance mécanique.

On a maintenant trouvé que, par un choix approprié de la forme géométrique des pastilles de sel aggloméré, on parvenait à améliorer sensiblement la résistance mécanique de celles-ci, particulièrement leur résistance aux chocs, à l'abrasion et à la compression.

L'invention concerne dès lors une pastille cylindrique de sel aggloméré, pour la régénération de matière échangeuse de cations, comprenant un corps cylindrique dont au moins une face terminale est bombée, ladite pastille étant caractérisée par un rapport géométrique

$$\frac{h}{d}$$

supérieur à 0,040 et inférieur à 0,155, h désignant la hauteur de la face bombée au-dessus du corps cylindrique et d désignant le diamètre équivalent du corps cylindrique.

Dans le cadre de l'invention, l'expression sel désigne du chlorure de sodium à l'état de particules solides. Les particules de sel présentent habituellement un diamètre inférieur à 1,5 mm, de préférence à 1 mm. Il est préférable d'éviter des granulométries trop fines, les diamètres supérieurs à 0,010 mm (de préférence à 0,050 mm) étant recommandés. Il est préférable d'utiliser des granulométries serrées. En pratique, on obtient de bons résultats avec du sel en particules de diamètre de 0,100 à 1 mm, les diamètres de 0,200 à 0,800 mm étant spécialement avantageux. Dans ce qui précède, le diamètre des particules de sel est défini par tamisage au moyen de tamis de la série TYLER.

La pastille de sel selon l'invention est formée de particules de sel agglomérées. L'agglomération est obtenue par compactage des particules dans une matrice.

La masse spécifique apparente de la pastille de sel selon l'invention conditionne à la fois son comportement pour la régénération d'une matière échangeuse de cations et sa résistance mécanique. En pratique, il est souhaitable que la masse spécifique apparente de la pastille de sel selon l'invention soit supérieure à 1,85 kg/dm$^3$, les valeurs de 1,90 à 1,99 kg/dm$^3$ étant préférées. La masse spécifique apparente optimum de la pastille de sel selon l'invention est obtenue par une sélection appropriée de la distribution granulométrique des particules de sel et de la pression du compactage.

La pastille de sel selon l'invention comprend un corps cylindrique dont une, au moins, des faces terminales est bombée. Le corps cylindrique peut être de révolution ou non. On préfère les corps de révolution. Les dimensions du corps cylindrique ne sont pas critiques. En général, dans le cas où la pastille de sel selon l'invention est destinée à la régénération des matières échangeuses de cations des adoucisseurs d'eau domestiques, le corps cylindrique présente avantageusement une hauteur sensiblement comprise entre 0,1 et 1,5 fois son diamètre équivalent. Dans le cas où le corps cylindrique de la pastille n'est pas de révolution, le diamètre équivalent est, par définition, le diamètre du cylindre de révolution, qui présente, en section transversale, la même aire que la section transversale dudit corps cylindrique Dans le cas où le corps cylindrique est de révolution, son diamètre est le diamètre équivalent. Des pastilles conformes à l'invention, qui conviennent bien pour la régénération des résines échangeuses de cations d'adoucisseurs d'eau domestiques, comprennent un corps cylindrique dont la hauteur h est sensiblement comprise entre 0,50 et 0,70 fois son diamètre équivalent.

La face bombée de la pastille est de préférence de révolution. Elle peut être elliptique ou sphérique. On préfère une surface sensiblement sphérique. Conformément à l'invention, la hauteur h de la face bombée au-dessus du corps cylindrique est supérieure à 0,040 et inférieure à 0,155 fois le diamètre du corps cylindrique (le diamètre du corps cylindrique étant défini plus haut). Les valeurs de 0,050 à 0,150 sont préférées pour le rapport h/d, les valeurs de 0,080 à 0,120 étant spécialement avantageuses. La pastille de sel selon l'invention peut comporter une seule face terminale bombée, l'autre face terminale ayant un autre profil (plan, cintré ou prismatique, par exemple). On préfère que les deux faces terminales de la pastille de sel soient bombées.

Selon une forme de réalisation avantageuse de l'invention, le corps cylindrique de la pastille présente un diamètre équivalent de 20 à 30 mm et une hauteur de 10 à 15 mm et la hauteur h de la face bombée est comprise entre 2 et 3 mm. Les particules conformes à cette forme de réalisation de l'invention conviennent spécialement bien pour la régénération des matières échangeuses de cations des adoucisseurs d'eau domestiques ou industriels.

Toutes autres choses étant égales, on a observé qu'en sélectionnant les paramètres géométriques de la pastille de sel pour respecter la relation h/d définie ci-dessus, on optimise la résistance globale de la pastille aux chocs, à l'abrasion et aux efforts de compression. Une optimisation de cette résistance globale de la pastille a pour corollaire que la pastille selon l'invention présente à la fois une bonne résistance au bris pendant sa manutention en sacs et son déchargement dans un bac à régénérant d'un adoucisseur d'eau et une bonne résistance à la pression exercée sur elle par une charge de sel dans le bac à régénérant.

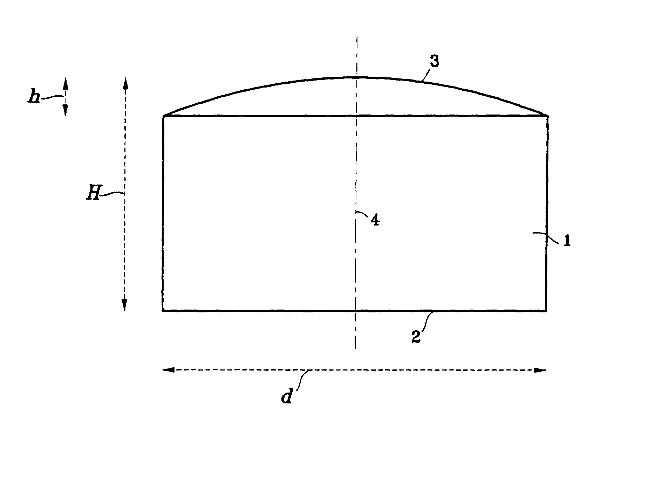

La figure unique du dessin annexé sert à illustrer l'invention.

On a représenté à la figure, en élévation, une pastille de sel conforme à l'invention. La pastille est obtenue par compactage de particules de sel. Elle comprend un corps cylindrique 1 dont une face 2 est plane et dont l'autre face 3 est bombée. Le corps cylindrique 1 est de révolution et la face bombée 3 est une surface sphérique dont le centre est sensiblement situé sur l'axe 4 du corps cylindrique 1.

Conformément à l'invention, la hauteur h de la face bombée 3 au-dessus du corps sphérique 1 est compris entre 0,080 et 0,120 fois le diamètre d de la surface sphérique 1.

Selon une forme de réalisation particulière, la pastille présente les caractéristiques suivantes :

| | |
|---|---|
| Hauteur totale de la pastille (H) | 15 mm, |
| Diamètre du corps cylindrique (d) | 25 mm, |
| Hauteur de la face bombée (h) | 2,5 mm, |
| Masse spécifique apparente | 1,95 kg/dm$^3$. |

Dans une variante de réalisation (non représentée) de la pastille de la figure, la surface 2 est également bombée et sphérique. Son diamètre peut être identique ou différent de celui de la face bombée 3. On préfère que les deux faces bombées aient le même diamètre.

L'intérêt de l'invention va ressortir des exemples suivants. Ceux-ci ont trait à deux séries d'essais réalisés respectivement avec des pastilles de sel aggloméré de dimensions et profils géométriques différents. Dans une première série d'essais, des pastilles ont été soumises à un test visuel de qualité et, dans une seconde série d'essais, des pastilles ont été soumises à des essais normalisés de résistance mécanique. Pour ces deux séries d'essais, les pastilles ont été fabriquées dans une machine de pastillage au départ d'un même lot de particules de sel, avec des conditions de compression sensiblement identiques.

Première série d'essais (test visuel de qualité).

Dans les exemples 1 à 4 qui suivent, les pastilles ont été ensachées en sacs de 25 kg dès leur sortie de la machine de pastillage, on a prélevé, de manière aveugle, un échantillon dans les sacs et on a réparti l'échantillon en trois classes, en fonction de l'aspect visuel des pastilles : une première classe a regroupé les pastilles intacts de l'échantillon, une seconde classe a regroupé les pastilles légèrement abîmées et la troisième classe a regroupé les pastilles très abîmées. Chaque classe a été exprimée en % du nombre total de pastilles de l'échantillon soumis au test. La répartition des pastilles en trois classes a été exécutée par une même personne pour tous les essais, sur base des mêmes critères visuels personnels.

Exemple 1 (non conforme à l'invention)

Dans cet exemple, on a mis en oeuvre un lot de pastilles de sel cylindriques, dont les deux faces terminales sont planes. Les pastilles soumises à l'essai présentaient les caractéristiques suivantes :

Hauteur totale (H) : 13,5 mm;
Diamètre (d) du corps cylindrique : 25,2 mm;
Masse spécifique apparente : 1,99 kg/dm$^3$.

Le résultat du test visuel de qualité est exprimé ci-dessous :

Classe n° 1 (pastilles intacts) : 2 %;
Classe n° 2 (pastilles légèrement abîmées) : 21 %;
Classe n° 3 (pastilles très abîmées) : 77 %.

Exemple 2 (non conforme à l'invention)

Dans cet exemple on a mis en oeuvre des pastilles de sel comprenant un corps cylindrique et deux faces terminales bombées. Les pastilles présentaient les caractéristiques suivantes :

Hauteur totale (H) : 13,4 mm;
Diamètre (d) du corps cylindrique : 25,2 mm;
Hauteur (h) des faces bombées : 0,5 mm;
Masse spécifique apparente : 1,92 kg/dm$^3$.

Ces pastilles présentaient un rapport h/d égal à 0,020, ce qui n'est pas conforme à l'invention.
Le résultat du test visuel de qualité est exprimé ci-dessous :

Classe n° 1 (pastilles intacts) : 6 %;
Classe n° 2 (pastilles légèrement abîmées) : 17 %;
Classe n° 3 (pastilles très abîmées) : 77 %.

Exemple 3 (non conforme à l'invention)

Dans cet exemple on a mis en oeuvre des pastilles de sel comprenant un corps cylindrique et deux faces terminales bombées. Les pastilles présentaient les caractéristiques suivantes :

Hauteur totale (H) : 16,5 mm;
Diamètre (d) du corps cylindrique : 25,2 mm;
Hauteur (h) des faces bombées : 4,0 mm;
Masse spécifique apparente : 1,92 kg/dm$^3$.

Ces pastilles présentaient un rapport h/d égal à 0,160 ce qui n'est pas conforme à l'invention.
Le résultat du test visuel de qualité est exprimé ci-dessous :

Classe n° 1 (pastilles intacts) : 39 %;
Classe n° 2 (pastilles légèrement abîmées) : 12 %;
Classe n° 3 (pastilles très abîmées) : 49 %.

Exemple 4 (conforme à l'invention)

Dans cet exemple on a mis en oeuvre des pastilles de sel comprenant un corps cylindrique et deux faces terminales bombées. Les pastilles présentaient les caractéristiques suivantes :

Hauteur totale (H) : 15,4 mm;

Diamètre (d) du corps cylindrique : 25,2 mm;
Hauteur (h) des faces bombées : 3,0 mm;
Masse spécifique apparente : 1,90 kg/dm$^3$.

Ces pastilles présentaient un rapport h/d égal à 0,119 ce qui est conforme à l'invention.

Le résultat du test visuel de qualité est exprimé ci-dessous :

Classe n° 1 (pastilles intacts) : 71 %;
Classe n° 2 (pastilles légèrement abîmées) : 8 %;
Classe n° 3 (pastilles très abîmées) : 20 %.

Une comparaison des résultats des exemples 1 à 3 (non conformes à l'invention) avec ceux de l'exemple 4 (conforme à l'invention) fait immédiatement apparaître le progrès réalisé par l'invention pour ce qui concerne l'aspect des pastilles produites et leur comportement à la manutention.

Seconde série d'essais (essais de résistance mécanique).

Les exemples 5 à 8 qui suivent concernent des essais de résistance mécanique effectués sur des pastilles Les essais de résistance mécanique ont consisté en un essai de résistance à l'écrasement, un essai de résistance à l'usure et un essai de résistance aux chocs.

Pour l'essai de résistance à l'écrasement, on a soumis une pastille individuelle à un effort croissant de compression dans une presse et on a déterminé la charge correspondant à la rupture de la pastille. Dans chaque exemple, dix pastilles ont été soumises à l'essai, la résistance à la compression étant la moyenne arithmétique des dix résultats obtenus.

Pour l'essai de résistance à l'usure, on a introduit environ 1 kg de pastilles dans un tambour horizontal, percé d'orifices calibrés, on a soumis le tambour à une rotation régulière, à une vitesse contrôlée, pendant un temps défini et on a pesé la perte de poids de l'échantillon dans le tambour, à l'issue de l'essai. L'indice d'usure est, par définition, la perte de poids, exprimée en % du poids de l'échantillon introduit initialement dans le tambour.

Pour l'essai de résistance aux chocs, on a soumis un échantillon d'environ 1 kg de pastilles à dix chutes successives de 1 m de haut et on a ensuite soumis l'échantillon à un fractionnement granulométrique à travers une paire de tamis calibrés de respectivement 5 mm et 10 mm d'ouverture de maille. On a pesé la fraction inférieure à 5 mm et la fraction 5 - 10 mm et on a exprimé le poids de chacune de ces fractions granulométriques en % du poids de l'échantillon mis en oeuvre.

Exemple 5 (non conforme à l'invention)

Dans cet exemple, on a utilisé un échantillon de pastilles provenant du même lot que les pastilles de l'exemple 1.

Les essais de résistance mécanique ont abouti aux résultats suivants :

Résistance à l'écrasement :    176 kg;
Indice d'usure :    4,8 %
Résistance aux chocs :    fraction 5 - 10 mm : 0,3 %
    fraction < 5 mm : 1,1 %

Exemple 6 (non conforme à l'invention)

Les pastilles utilisées dans cet exemple ont été extraites du même lot que celles de l'exemple 2.

Les essais de résistance mécanique ont abouti aux résultats suivants :

Résistance à l'écrasement :    186 kg;
Indice d'usure :    4,1 %
Résistance aux chocs :    fraction 5 - 10 mm : 0,1 %
    fraction < 5 mm : 0,75 %

Exemple 7 (non conforme à l'invention)

Les pastilles utilisées dans cet exemple ont été extraites du même lot que celles de l'exemple 3.

Les essais de résistance mécanique ont abouti aux résultats suivants :

| | |
|---|---|
| Résistance à l'écrasement : | 151 kg; |
| Indice d'usure : | 1,4 % |
| Résistance aux chocs : fraction 5 - 10 mm : | 0,1 % |
| | fraction < 5 mm : 0,3 % |

Exemple 8 (conforme à l'invention)

Les pastilles utilisées dans cet exemple ont été extraites du même lot que celles de l'exemple 4.
Les essais de résistance mécanique ont abouti aux résultats suivants :

| | |
|---|---|
| Résistance à l'écrasement : | 180 kg; |
| Indice d'usure : | 1,9 % |
| Résistance aux chocs : fraction 5 - 10 mm : | 0,0 % |
| | fraction < 5 mm : 0,4 % |

Une comparaison des résultats des exemples 5 à 7 (non conformes à l'invention) avec ceux de l'exemple 8 (conforme à l'invention) fait apparaître le progrès apporté par l'invention pour ce qui concerne la résistance mécanique globale des pastilles de sel.

**Revendications**

1. Pastille cylindrique de sel aggloméré, pour la régénération de matière échangeuse de cations, comprenant un corps cylindrique dont au moins une face terminale est bombée, **caractérisée par** un rapport géométrique

$$\frac{h}{d}$$

supérieur à 0,040 et inférieur à 0,155, h désignant la hauteur de la face bombée au-dessus du corps cylindrique et d désignant le diamètre équivalent du corps cylindrique.

2. Pastille selon la revendication 1, **caractérisée en ce que** le rapport géométrique susdit est compris entre 0,080 et 0,120.

3. Pastille selon la revendication 1 ou 2, **caractérisée en ce que** le corps cylindrique présente un diamètre équivalent d de 20 à 30 mm et une hauteur de 10 à 15 mm et la hauteur h précitée de la face bombée est comprise entre 2 et 3 mm.

4. Pastille selon l'une quelconque des revendications 1 à 3, **caractérisée en ce qu'**elle présente une hauteur totale comprise entre 0,50 et 0,70 fois le diamètre équivalent précité.

5. Pastille selon l'une quelconque des revendications 1 à 4, **caractérisée par** une masse spécifique apparente supérieure à 1,85 kg/dm$^3$.

6. Pastille selon la revendication 5, **caractérisée en ce que** la masse spécifique apparente est de 1,90 à 1,99 kg/dm$^3$.

7. Pastille selon l'une quelconque des revendications 1 à 6, **caractérisée en ce que** le corps cylindrique est de révolution et la face bombée est sphérique.

8. Pastille selon l'une quelconque des revendications 1 à 7, **caractérisée en ce que** ses deux faces terminales sont bombées.

9. Pastille selon l'une quelconque des revendications 1 à 8, **caractérisée en ce qu'**elle est formée de particules agglomérées de sel, de 0,200 à 0,800 mm de diamètre.

10. Pastille selon l'une quelconque des revendications 1 à 9, destinée à la régénération des résines échangeuses de cations des adoucisseurs d'eau.

**Patentansprüche**

1. Zylindrische Tablette aus agglomeriertem Salz zur Regenerierung von Kationenaustauschermaterial, umfassend einen zylindrischen Körper, von welchem wenigstens eine Endfläche gewölbt ist, **gekennzeichnet durch** ein geometrisches Verhältnis

$$\frac{h}{d}$$

größer als 0,040 und kleiner als 0,155, wobei h die Höhe der gewölbten Fläche oberhalb des zylindrischen Körpers bezeichnet und d den Durchmesser bezeichnet, welcher dem zylindrischen Körper entspricht.

2. Tablette nach Anspruch 1, **dadurch gekennzeichnet, daß** das geometrische Verhältnis von 0,080 bis 0,120 beträgt.

3. Tablette nach Anspruch 1 oder 2, **dadurch gekennzeichnet, daß** der zylindrische Körper einen d entsprechenden Durchmesser von 20 bis 30 mm und eine Höhe von 10 bis 15 mm aufweist und die vorgenannte Höhe h der gewölbten Fläche von 2 bis 3 mm beträgt.

4. Tablette nach einem der Ansprüche 1 bis 3, **dadurch gekennzeichnet, daß** diese eine Gesamthöhe aufweist, welche das 0,50 bis 0,70-fache des vorgenannten Äquivalentdurchmessers beträgt.

5. Tablette nach einem der Ansprüche 1 bis 4, **gekennzeichnet durch** eine scheinbare Dichte über 1,85 kg/dm$^3$.

6. Tablette nach Anspruch 5, **gekennzeichnet durch** eine.scheinbare Dichte von 1,90 bis 1,99 kg/dm$^3$.

7. Tablette nach einem der Ansprüche 1 bis 6, **dadurch gekennzeichnet, daß** der zylindrische Körper ein Rotationskörper ist und die gewölbte Fläche kugelförmig ist.

8. Tablette nach einem der Ansprüche 1 bis 7, **dadurch gekennzeichnet, daß** beide Endflächen gewölbt sind.

9. Tablette nach einem der Ansprüche 1 bis 8, **dadurch gekennzeichnet, daß** man Agglomeratteilchen des Salzes mit 0,200 bis 0,800 mm Durchmesser ausbildet.

10. Tablette nach einem der Ansprüche 1 bis 9, welche zur Regeneration von Kationenaustauscherharzen von Wasserenthärtern bestimmt ist.

**Claims**

1. Cylindrical pellet of agglomerated salt, for the regeneration of a cation-exchange material, comprising a cylindrical body of which at least one end face is raised, **characterized by** a geometric ratio

$$\frac{h}{d}$$

greater than 0.040 and less than 0.155, h denoting the height of the raised face above the cylindrical body and d denoting the equivalent diameter of the cylindrical body.

2. Pellet according to Claim 1, **characterized in that** the aforesaid geometric ratio is between 0.080 and 0.120.

3. Pellet according to Claim 1 or 2, **characterized in that** the cylindrical body has an equivalent diameter d of 20 to 30 mm and a height of 10 to 15 mm and the abovementioned height h of the raised face is between 2 and 3 mm.

4. Pellet according to any one of Claims 1 to 3, **characterized in that** it has a total height of between 0.50 and 0.70 times the abovementioned equivalent diameter.

5. Pellet according to any one of Claims 1 to 4,
**characterized by** an apparent specific mass greater than 1.85 mg/dm$^3$.

6. Pellet according to Claim 5, **characterized in that** the apparent specific mass is from 1.90 to 1.99 kg/dm$^3$.

7. Pellet according to any one of Claims 1 to 6, **characterized in that** the cylindrical body is of revolution and the raised face is spherical.

8. Pellet according to any one of Claims 1 to 7, **characterized in that** its two end faces are raised.

9. Pellet according to any one of Claims 1 to 8, **characterized in that** it is formed of agglomerated particles of salt, of 0.200 to 0.800 mm in diameter.

10. Pellet according to any one of Claims 1 to 9, intended for the regeneration of the cation exchange resins of water softeners.